**Europäisches Patentamt**

**European Patent Office**

**Office européen des brevets**

(11) Veröffentlichungsnummer: **0 017 795**
A1

## EUROPÄISCHE PATENTANMELDUNG

(21) Anmeldenummer: **80101513.2**

(22) Anmeldetag: **22.03.80**

(51) Int. Cl.³: **C 08 L 91/06, A 63 H 33/00**

(30) Priorität: **12.04.79 DE 2914927**

(43) Veröffentlichungstag der Anmeldung: **29.10.80**
**Patentblatt 80/22**

(84) Benannte Vertragsstaaten: **AT BE CH FR GB IT LU NL SE**

(71) Anmelder: **Pelikan Aktiengesellschaft,
Podbielskistrasse 141, D-3000 Hannover 1 (DE)**

(72) Erfinder: **Schmitt, Franz Ullrich, Dr. Dipl.-Chem.,
Sporstrasse 4, D-3000 Hannover 1 (DE)**
Erfinder: **Bosse, Hartmut, Hildesheimer Strasse 117,
D-3000 Hannover (DE)**
Erfinder: **Tietze, Lothar, Starenweg 9,
D-3151 Hämelerwald (DE)**
Erfinder: **Lobschat, Horst, Wolfenbütteler Strasse 16,
D-3000 Hannover (DE)**

(54) Schwimmfähige Modelliermasse.

(57) Modelliermassen, kurz «Knete» genannt, bestehend aus Wachsen, Farbpigmenten, Füllstoffen und evtl. Ölen, deren spezifisches Gewicht durch Zusatz eines geeigneten, von sich aus sehr leichten Füllstoffes kleiner als 1 gehalten wird. Als hierfür geeignete Füllstoffe können Granulate (2) dienen, deren Liter-Gewicht 50 g nicht überschreitet, z.B. Styroporkügelchen, Korkmehl, Holzmehl, Polyurethanschaum.

0017795

Hannover, 19.2.1979
RE-P-ht-wu-79/1


Schwimmfähige Modelliermasse

Modelliermassen, im täglichen Umgang kurz "Knete"
genannt, enthalten neben Wachsen oder wachsähnlichen
Stoffen und Farbpigmenten Füllstoffe und gegebenenfalls auch Öle. Solche Modelliermassen sind schwerer
als Wasser. Zum Spielen im Wasser oder zur Fertigung
schwimmfähiger Gegenstände sind sie nicht geeignet.

Der vorliegenden Erfindung lag die Aufgabe zugrunde,
eine "Schwimmknete", also eine schwimmfähige Modelliermasse zu schaffen, dessen spezifisches Gewicht
kleiner als das des Wassers ist.

0017795

Mit den üblichen Füllstoffen konnte man zwar bis
etwa an das spezifische Gewicht 1 = das des Wassers
herankommen, aber eine Masse, die auf dem Wasser
schwimmt, also mit wesentlichen Teilen darüber
hinausragt, war nicht zu erreichen. Andererseits
müßte eine Knete üblicher Rezeptur mit einem spezifischem Gewicht von z. B. 1,8 125 ml z. B. von
Spyroporkügelchen mit einem Raumgewicht von 20
bis 30 g/l je 100 g Knete zugefügt werden, um
eine Dichte von 1 zu erreichen. Bei einem spezischen Gewicht von 1,6 für die Knete werden immer
noch 280 ml Styroporkügelchen je 100 g Knete für
die gleiche Wirkung benötigt. Die Aufnahmefähigkeit der Knetmassen für körnige extrem leichte
Füllstoffe ist aber begrenzt. Deshalb sollte zunächst die Rezeptur der Knete unter Beibehaltung
der bisherigen Stoffe so abgeändert werden, daß
deren spezifisches Gewicht annähernd auf 1 abgesenkt ist.

Das erreicht man beispielsweise mit einer Rezeptur
gemäß

Beispiel 1

    Vaseline 27,8 Gewichtsteile
    Weichwachs 36,0 Gewichtsteile
    PVC-Pulver 36,0 Gewichtsteile
    Farbpigment 0,1 Gewichtsteile

In dieser Rezeptur sind gegenüber einer an sich
üblichen Rezeptur schwere anorganische Pigmente
weitestgehend gegen wesentlich leichtere organische Pigmente ausgetauscht worden. Die Rezeptur weist an dieser Stelle PVC-Pulver aus. Es
könnte aber z. B. auch Polyäthylen-Pulver oder
pulverisierbare andere Polymere eingesetzt werden. Ohne die innere Struktur der Knete wesentlich zu verändern, wird immerhin bereits eine
erhebliche Gewichtsreduzierung erreicht, da diese
"Leichtpigmente" eine Dichte um 0,8 haben, kann

-3-

mit dem Einsatz allein keine weitere Gewichtsveränderung der Gesamtmasse erzielt werden, ohne
deren innere Struktur wesentlich zu verändern.

0017795

Hier setzt nun die Erfindung ein:

Es hat sich gezeigt, daß man einer Knete gemäß
oben angegebenem Rezept unbedenklich, d. h. ohne
ihre Funktion wesentlich nachteilig zu beeinflussen, eine gewisse Menge granulierten Füllstoffmaterialies zusetzen kann, dessen 1-Gewicht bei
20 bis 50 g/l liegt. Es hat sich gezeigt, daß
eine Knete der angegebenen Art bis zu 180 ml je
100 g Knetmasse aufzunehmen vermag, ohne daß dabei deren innere Struktur und Mollelierbarkeit
ungünstigt beeinflußt wird und das Granulat in
der Masse ausreichend gehalten wird.

Beispiel 2:

    Vaseline 27,8 Gewichtsteile
    Weichwachs 36,0 Gewichtsteile
    PVC-Pulver 36,0 Gewichtsteile
    Farbpigment 0,1 Gewichtsteile
    Styropor

In diesem Beispiel wird also zum Leichtpigment
ein granulierter extrem leichter Füllstoff hinzugefügt, so daß eine Dichte - spezifisches Gewicht von 0,5 bis 0,6 entsteht und damit ein Produkt, daß die Bedingung der Aufgabenstellung voll
erfüllt.

Als extrem leichte Füllstoffe kommen neben Styroporkügelchen beispielsweise noch in Frage

| | | |
|---|---|---|
| Korkmehl | D = | 0,2 - 0,25 |
| Holzmehl | D = | 0,35 - 0,8 |
| Polyurethanschaum | D = | 20 - 30 g/l |
| Steinschaum auf Basis Luparit bzw. Quarzporphyr | D = | 0,5 -0,6 |
| PVC-Hohlkugel | D = | 0,5 - 0,8 |
| Glashohlkugel | D = | 0,6 |

0017795

Beiliegende Skizze veranschaulicht schematisch eine Knete nach der Erfindung. In die Knetmasse (1) sind Granulate (2) entsprechend vorstehender Ausführungen eingearbeitet.

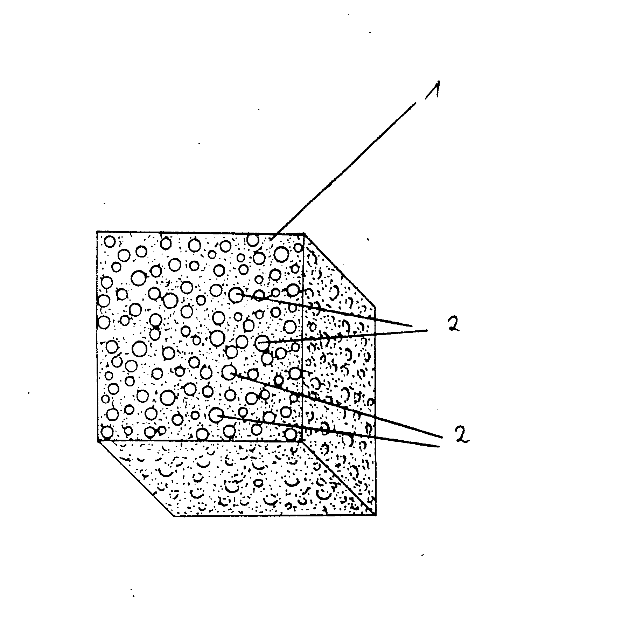

Patentansprüche

1. Modelliermasse auf Basis von Wachsen, Farbpigmenten, Füllstoffen und gegebenenfalls Ölen,
   dadurch gekennzeichnet,
   daß als Füllstoff allein oder zusätzlich ein
   Material dient, mit dessen Hilfe das spezifische
   Gewicht der Modelliermasse $> 1$ gehalten wird.

2. Modelliermasse nach Anspruch 1,
   dadurch gekennzeichnet,
   daß als Füllstoff ein granuliertes Material
   dient, dessen 1-Gewicht 50 g nicht überschreitet.

3. Modelliermasse nach Anspruch 2,
   dadurch gekennzeichnet,
   daß als Füllstoff Styroporkügelchen verwendet
   werden.

4. Modelliermasse nach Anspruch 2,
   dadurch gekennzeichnet,
   daß als Füllstoff Korkmehl verwendet wird.

5. Modelliermasse nach Anspruch 2,
   dadurch gekennzeichnet,
   daß als Füllstoff Holzmehl verwendet wird.

6. Modelliermasse nach Anspruch 2,
   dadurch gekennzeichnet,
   daß als Füllstoff Polyurethanschaum verwendet wird.

+15769

7. Modelliermasse nach Anspruch 2,
   dadurch gekennzeichnet,
   daß als Füllstoff ein anorganischer Schaum
   wie Steinschäume auf Basis von Luparit bzw.
   Quarzporphyr verwendet wird.

+15769

1/1

Europäisches Patentamt

**EUROPÄISCHER RECHERCHENBERICHT**

0017795

Nummer der Anmeldung

EP 80 10 1513.2

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - A - 1 902 299 (KENNER PRODUCTS CO.) <br><br> * Anspruch 1; Seite 6, Zeilen 15 bis 19; Seite 12, vorletzte Zeile bis Seite 13, Absatz 2 * <br> & FR - A - 2 000 422 <br><br> -- | 1,2, 4,5 |
| | DE - A - 2 328 273 (MONSANTO CHEMICALS LTD.) <br><br> * Anspruch 1; Seite 3, Absatz 3 bis Seite 5, Absatz 2 * <br> & FR - A - 2 187 847 <br><br> -- | 1-3, 6 |
| A | DE - C - 116 769 (H. ELMQVIST) <br> * Spalte 1, Zeilen 31 bis 36; Spalte 2, Zeilen 24 bis 27 * <br><br> -- | |
| A | DE - B1 - 2 710 115 (LÄUFER-WERK SCHWERDT & RENNER) <br> * Spalte 1, Zeilen 28 bis 34 * <br><br> ---- | |

**KLASSIFIKATION DER ANMELDUNG (Int.Cl.3)**

C 08 L 91/06

A 63 H 33/00

**RECHERCHIERTE SACHGEBIETE (Int. Cl.3)**

A 63 H 9/00
A 63 H 33/00
B 44 C 3/04
C 08 L 91/00
C 08 L 91/06
C 08 L 91/08
C 09 K 3/00
G 09 B 19/10

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Berlin | 17-07-1980 | DROPMANN |

EPA form 1503.1 06.78